# EUROPEAN PATENT APPLICATION

(11) **EP 4 266 287 A1**
(43) Date of publication of application: **25.10.2023**
(21) Application number: 22305594.8
(22) Date of filing: 21.04.2022
(51) Int. Cl.: G08G 5/00

(54) **ADS-B VALIDATION USING DIRECTIONAL ANTENNA**

(71) Applicant: HONEYWELL AEROSPACE SAS, 31300 Toulouse (FR)
(72) Inventor: KORENCIAK, Lubos, 31300 Toulouse (FR); KLANG, Pavel, 31300 Toulouse (FR); PALENSKA, Marketa, 31300 Toulouse (FR); HOFEREK, Jakub, 31300 Toulouse (FR)
(74) Representative: Haseltine Lake Kempner LLP

(57) **Abstract**

A system including a directional antenna that tracks the direction and strength of automatic dependent surveillance - broadcast (ADS-B) messages received using the directional antenna to validate that the digital position information included in the ADS-B messages conforms to the measured and tracked direction and range rate of the source of the ADS-B messages. The system may use existing directional antennae used for airborne collision avoidance systems (ACAS) that are configured to receive transponder responses at 1090 MHz (the same frequency as ADS-B messages) or any other directional antenna able to provide bearing and signal strength. The system of this disclosure may be valuable to validate ADS-B messages transmitted by nearby aircraft that do not include ACAS transponders, such as smaller general aviation (GA) aircraft, some helicopters and some unmanned aerial systems (UAS).

## Description

The project leading to this application has received funding from the SESAR Joint Undertaking under grant agreement No 874474 under European Union's Horizon 2020 research and innovation programme.

### TECHNICAL FIELD

The disclosure relates to aviation collision warning systems.

### BACKGROUND

Automatic dependent surveillance - broadcast (ADS-B) is a surveillance technology in aerospace that is based on sharing position information with surrounding users, for example for detect and avoid (DAA). The ADS-B system uses a global navigation satellite system (GNSS) receiver onboard an aircraft to determine the position of the aircraft. ADS-B regularly transmits a messages that include the aircraft own position, based on the GNSS position, speed, identification or other information to other aircraft.

### SUMMARY

In general, the disclosure describes a system that receives ADS-B messages using a directional antenna. The system may be configured to track and analyze the direction and as well as the signal strengths of the received messages to validate that the digital position information included in the ADS-B messages conform to the direction of the source of the ADS-B message. The system may use existing directional antennae used for traffic collision avoidance systems (TCAS) that are configured to receive transponder responses at 1090 MHz (the same frequency as ADS-B messages) or any other antenna that can measure bearing and signal strength. The system of this disclosure may be valuable to validate ADS-B messages transmitted by nearby aircraft, especially for those aircraft that do not include TCAS transponders, such as smaller general aviation (GA) aircraft, some helicopters and some unmanned aerial systems (UAS). Nearby aircraft that may pose a collision risk are referred to as "intruders" by some airborne collision avoidance systems (ACAS), including TCAS.

The directional ADS-B of this disclosure may also estimate range rate based on signal strength of received ADS-B messages of an intruder. In contrast to other systems that may attempt to estimate range of a target from the signal strength, the directional ADS-B may estimate "range rate" based on tracking signals strengths for each intruder.

In one example, this disclosure describes an airborne system comprising: receiver circuitry configured to receive automatic dependent surveillance - broadcast (ADS-B) messages; a directional antenna; and processing circuitry configured to: receive an ownship position and attitude based on ownship navigation and avionics systems; receive an ADS-B message, of a sequence of ADS-B messages from an intruder via the directional antenna; compute a bearing to the intruder based on: phase analysis of the received ADS-B message from the directional antenna; and from the ownship position; incorporate the computed bearing to the track of measured bearings of the intruder, wherein the track of measured bearings is based on the sequence of ADS-B messages received from the intruder; receive from the receiver circuitry, a position of the intruder decoded from digital content of the ADS-B message, calculate a second bearing to the intruder based on the decoded position; compare the track of measured bearings to the second bearing; and in response to the track of measured bearings matching the second bearing: determine that the sequence of ADS-B messages received from the intruder are valid; and output an electronic signal that includes: a validity status for the sequence of ADS-B messages; and a validated bearing to the intruder.

In another example, this disclosure describes a device comprising receiver circuitry configured to: receive automatic dependent surveillance - broadcast (ADS-B) messages; and connect to a directional antenna; and processing circuitry configured to: receive an ownship position and attitude based on ownship navigation and avionics systems, receive an ADS-B message, of a sequence of ADS-B messages from an intruder via the directional antenna; compute a bearing to the intruder based on: phase analysis of the received ADS-B message from the directional antenna; and from the ownship position; incorporate the computed bearing to the track of measured bearings of the intruder, wherein the track of measured bearings is based on the sequence of ADS-B messages received from the intruder; receive from the receiver circuitry, a position of the intruder decoded from digital content of the ADS-B message, calculate a second bearing to the intruder based on the decoded position; compare the track of measured bearings to the second bearing; and in response to the track of measured bearings matching the second bearing: determine that the sequence of ADS-B messages received from the intruder are valid; and output an electronic signal that includes: a validity status for the sequence of ADS-B messages; and a validated bearing to the intruder.

In another example, this disclosure describes a non-transitory computer-readable storage medium comprising instructions that, when executed, cause processing circuitry of a computing device to: receive an ownship position and attitude based on ownship navigation and avionics systems; receive automatic dependent surveillance - broadcast (ADS-B) messages from receiver circuitry operatively coupled to a directional antenna; compute a bearing to the intruder based on: phase analysis of the received ADS-B message from the directional antenna; and from the ownship position; incorporate the computed bearing to the track of measured bearings of the intruder, wherein the track of measured bearings is based on the sequence of ADS-B messages received from the intruder; receive from the receiver circuitry, a position of the intruder decoded from digital content of the ADS-B message, calculate a second bearing to the intruder based on the decoded position of the intruder; compare the track of measured bearings to the second bearing; and in response to the track of measured bearings matching the second bearing: determine that the ADS-B message is valid; and output an electronic signal that includes: a validity status for the sequence of ADS-B messages; and a validated bearing to the intruder.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example airport environment including one or more aircraft that include an ADS-B system with independent validation of this disclosure.
FIG. 2 is a conceptual diagram illustrating an example physical layout of a four-element antenna according to one or more techniques of this disclosure.
FIG. 3 is a block diagram illustrating one possible example implementation of the independent ADS-B validation of this disclosure, included in programming instructions for an on-board avionics system.

### DETAILED DESCRIPTION

The various versions of airborne collision avoidance systems (ACAS) provide a last-resort safety net to reduce the risk of mid-air collisions or near mid-air collisions between aircraft. ACAS serves as a back-up and co-exists with air traffic control (ATC) separation standards. In some examples, ACAS is an aircraft system based on secondary surveillance radar (SSR) transponder signals. An ACAS may interrogate the Mode C and Mode S transponders of nearby aircraft ('intruders') and from the replies tracks their altitude and range and issues alerts to the pilots, as appropriate. Most versions of ACAS will not detect non-transponder-equipped aircraft. One version of an ACAS is called the traffic collision avoidance system (TCAS). Similarly, in some examples, intruders fitted with Mode A-only transponders are not tracked nor detected by TCAS because TCAS does not use Mode A interrogations. However, non-transponder equipped aircraft may output ADS-B messages that include the aircraft ID, position and other information.

Aircraft equipped with ACAS may have one or two antennae. Larger aircraft may locate the antennae on the top and bottom of the aircraft to avoid the body of the ownship aircraft from shielding incoming ACAS signals. In some examples the antennae used by ACAS may include a directional antenna mounted on the top of the aircraft and either an omni-directional or a directional antenna mounted on the bottom of the aircraft. The ACAS device onboard the ownship aircraft may transmit interrogations on 1030 MHz from the antennae. Target aircraft equipped with transponders may receive interrogations at 1030 MHz and reply to the received interrogations at 1090 MHz. The ownship antennae receive transponder replies, at 1090 MHz, and send these replies to processing circuitry of the ACAS device. ACAS surveillance of Mode S equipped aircraft is based on the selective address feature of the Mode S transponder. TCAS II listens for the spontaneous transmissions (squitters) sent once per second by Mode S transponders. Following receipt of a squitter, the ownship ACAS may send a Mode S interrogation to the Mode S address for the intruder contained in the squitter message. ACAS uses the reply received to measure bearing and determine range of the intruder aircraft from the measured round-trip time. The altitude is decoded from the digital information in the message. Similarly, ADS-B IN systems may decode the digital information in an ADS-B OUT message to determine the location of an intruder aircraft.

However, ADS-B OUT messages can contain erroneous position information from intruder aircraft. In some examples errors may be caused by equipment issues on intruder vehicles, or ADS-B messages may be intentionally spoofed to output erroneous information. For Mode S equipped intruder aircraft, an ACAS equipped ownship may validate an ADS-B message with ACAS interrogations, described above. For aircraft with no transponder, or Mode A-only transponders, the ownship may not be able to validate the ADS-B message from the intruder. The techniques of this disclosure include receiving ADS-B messages through a directional antenna, e.g., a directional antenna configured to receive ACAS messages or some similar directional antenna. Processing circuitry on the ownship may perform phase and/or amplitude analysis on the ADS-B IN message received by the directional antenna to validate that the reported location in the digital portion of the ADS-B message corresponds to a calculated bearing based on the phase and/or amplitude analysis of the received ADS-B message.

The techniques of this disclosure may be applied to several example applications. Some example applications, or use cases, may include bearing and/or range rate validation to avoid inconsistent position of intruder on the display of a collision warning system. Other examples may also include bearing and/or range rate validation of intruder, where the intruder does not have transponder, and ownship may have no intruder detection radar to independently validate ADS-B messages, even if the ownship has a weather radar. For ownship aircraft with radar, the techniques of this disclosure may provide faster detection of intruder by radar based on a validated, e.g., a true bearing to an intruder when the digital position in ADS-B message is wrong.

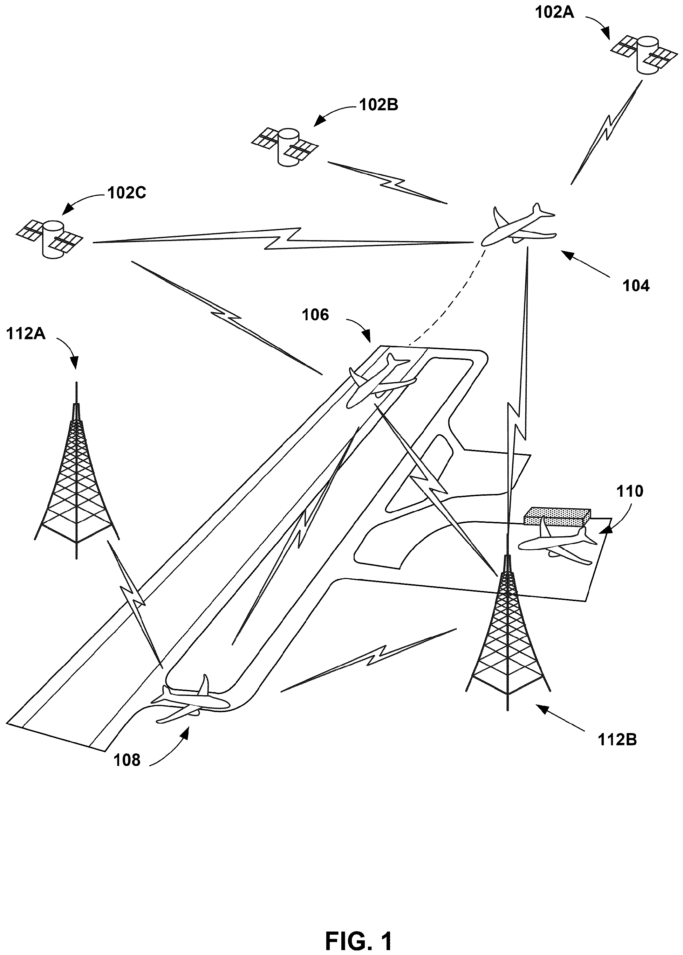

FIG. 1 is a conceptual diagram illustrating an example airport environment including one or more aircraft that include an ADS-B system with independent validation of this disclosure. The ADS-B system with independent validation, e.g., directional bearing validation may also be referred to as "directional ADS-B" or "independent ADS-B" in this disclosure.

Aircraft and other vehicles operating near the airport may receive position information from, for example one or more Global Navigation Satellite Systems (GNSS), such as the Global Positioning System (GPS). A constellation of satellites 102A, 102B, 102C, and other satellites not shown in FIG. 1, may output signals received by the aircraft and used to calculate their location, speed, altitude and so on. In some examples the signals from the satellites may be subject to multi-path issues, including reflections off airport structures such as hangars, other aircraft and so on that may cause location inaccuracy. In other examples, aircraft, or ground stations may intentionally spoof ADS-B OUT signals for various reasons including to hide criminal activity, carry out terrorism acts, disrupt aviation activity, for military activities and other reasons.

Aircraft, and other vehicles, may receive ADS-B IN signals from other vehicles describing the vehicle location, altitude, speed, heading and so on. In some examples, ADS-B IN signals may come directly from the transmitting vehicle, e.g., from aircraft 104 to aircraft 106, and vice versa. In other examples, ADS-B IN signals may come from ADS-B ground stations, e.g., ground stations 112A and 112B. Because any location errors from the GPS is encoded in the ADS-B message from the target, the ownship vehicle may not be able to validate and check for multipath, intentional spoofing or other GPS errors with a standard ADS-B configuration. Many different GPS receiver manufactures may have differences in sensitivity, error correction and other functions. In some examples, data points that may be corrupted or erroneous may be referred to as jams, or jammed data.

In some examples, the ADS-B OUT signals broadcast from the vehicles may include inaccuracies, such as the GPS issues or spoofing described above. In some examples, ADS-B system inaccuracy in the transmitted ADS-B messages may cause nuisance alerts from traffic collision warning systems, e.g., ACAS, for an aircraft. Some of received traffic data may be erroneous and should not be used in the prediction algorithms of the traffic collision warning systems. In some examples, the traffic collision systems may be onboard an aircraft, or other vehicle, and may process traffic data received via ADS-B to provide an alert to the vehicle operator, e.g., the flight crew of an aircraft. In the example of an unmanned aerial vehicle (UAV), in some examples, the traffic collision warning system may be onboard the UAV, similar to an onboard traffic collision warning system for a manned aircraft. In other examples, traffic collision system for the vehicle may be at some other location, such as a ground control station for the UAV. In either case, the traffic collision alerting system may provide alerts to the vehicle operator. To simplify the explanation, in this disclosure all collision warning systems may be referred to as ACAS. Though an airborne collision avoidance system may be primarily directed to preventing airborne collisions, some traffic collision systems may also be configured to avoid collisions on the ground with other aircraft or other ground vehicles, e.g., fuel trucks, maintenance vehicles and so on.

The directional ADS-B of this disclosure may use the directional 1090MHz antenna used for active interrogations for ACAS to determine the bearing of an incoming ADS-B In message. The directional ADS-B may validate the incoming ADS-B IN message by comparing the measured bearing from the directional antenna with a calculated bearing based on the digital latitude and longitude in the ADS-B message. In other words, an airborne system may include receiver circuitry configured to receive and interpret ADS-B messages, along with a directional antenna configured to receive ACAS responses from a transponder, e.g., ACAS.

The airborne system may determine the ownship position, e.g., geographical location, altitude, heading, and attitude based on ownship navigation and avionics systems. Some examples include GPS, radio navigation, inertial navigation, radar navigation, altimeter, gyroscopic instruments and other equipment including in ownship avionics. The processing circuitry of the system may include the ownship position as part of the calculation to determine the intruder bearing.

The airborne system may further include processing circuitry that may receive any one or more of ADS-B message, a Mode S reply or an interrogation from an intruder via the directional ACAS antenna. The processing circuitry may calculate a bearing to the intruder based on phase and amplitude analysis of the received ADS-B message from the directional antenna. The processing circuitry may incorporate the calculated bearing based on the phase and/or amplitude analysis of the received ADS-B message into the track of measured bearing of the intruder stored at the memory. In a similar manner, the processing circuitry may store and update the tracked bearings for numerous intruders in the system memory.

The processing circuitry may then decode the position of the intruder from digital content of the ADS-B message and calculate a second bearing to the intruder based on the decoded position, as well as the ownship current position. The processing circuitry may compare the track of measured bearings to the second bearing, and in response to the track of measured bearings matching the second bearing, determine that a sub-set of the sequence of ADS-B messages is valid. In response to the first bearing not matching the second bearing, the processing circuitry may determine that the ADS-B message is invalid. In some examples, the receiver circuitry for the ADS-B messages may include the processing circuitry to perform the independent ADS-B validation, and so the receiver circuitry may connect to the directional antenna.

In some examples the processing circuitry may determine whether the first (tracked) bearing matches the second calculated bearing to within some tolerance, because the first and second bearing calculations may not result in the exact same bearing. For example, the processing circuitry may determine that the ADS-B message is not valid unless the first bearing is within one degree, two degrees, five degrees, ten degrees or some other predetermined threshold range of the second bearing.

The ADS-B directional and range rate validation techniques of this disclosure may support extended hybrid surveillance or similar features that allows the aircraft, and other vehicles, to reduce the usage of the 1090 MHz frequency, which may result in less interference in busy airspace, fewer garbled messages, reduced power consumption and other advantages. Extended hybrid surveillance may also include adding passive surveillance intervals that reduce the need for active ACAS interrogations.

Extended hybrid surveillance is a feature which may be included as optional functionality in some ACAS units. Hybrid surveillance is a method to decrease the Mode S surveillance interrogations by an aircraft's ACAS unit. Specifically, ACAS units equipped with hybrid surveillance may use passive surveillance instead of active surveillance to track intruders that meet validation criteria and are not projected to be near-term collision threats.

With active surveillance, ownship ACAS may transmit interrogations at 1030 MHz to the transponder for one or more intruder vehicles. The intruder transponder reply transmission, on 1090 MHz, may include digital information with identity, altitude and other information for the intruder. The ACAS system may estimate range based on round-trip time from interrogation to receiving the response. With passive surveillance, position data in the broadcast message from the transponder of the intruder come from an onboard navigation source, such as GPS. The ownship may receive the broadcast (ADS-B) by the use of Mode S extended squitter, also known as 1090ES. In some examples, the ownship ACAS may track an intruder with passive surveillance while the intruder is not a collision threat. When the calculated collision risk is increased, the ACAS system may increase the number of interrogations, e.g., from every minute to every few seconds to full active interrogation rate of an interrogation every second. The intent of hybrid surveillance is to reduce the ACAS interrogation rate through the judicious use of the ADS-B data provided via the Mode S extended squitter without any degradation of the safety and effectiveness of the ACAS. The ADS-B directional validation features of this disclosure may provide additional information to allow a reduced interrogation rate e.g., for validated intruders the validation rate can be further reduced; and to identify spoofed ADS-B data.

In addition to being useful for validating intruder aircraft locations for intruder aircraft that do not have an ACAS transponder on board for validation by the ownship aircraft, the techniques of this disclosure may also be compatible with other collision avoidance systems. For example, ACAS X is a system in development that is expected to provide improvements over the current ACAS II systems. ACAS X variants detect nearby aircraft by receiving sensor measurements from onboard surveillance systems and estimate the relative position and speed of these aircraft by using tracking algorithms. ACAS X definition contains in particular variations including ACAS Xa for large aircraft, and ACAS Xu, for unmanned aircraft, ACAS-Xr, for rotorcraft and ACAS-sXu, for small unmanned aerial systems (UAS).

In some examples, the ADS-B directional validation techniques may support other equipment used by aircraft to detect intruder aircraft. For example, some of detect and avoid systems use other surveillance methods, with more direct measurement processes to validate ADS-B data before the received ADS-B data is used for certain functions. An example surveillance system may include radar that may directly measure relative range, bearing, elevation angle, and range rate of intruders. Some examples of weather radar may include some intruder detection capability. In some examples, radar has faster detection of an intruder when the probable position of the intruder is known. The directional ADS-B of this disclosure may validate the probable position of an intruder what may result in less frequent validation by radar. Moreover, the ADS-B validation disclosure can improve the detection of intruders by radar, e.g., by providing accurate bearing of the intruder if the position in the ADS-B message is not valid.

The directional ADS-B of this disclosure may also estimate range rate based on signal strength of received ADS-B messages of an intruder. In contrast to other systems that may attempt to estimate range of a target from the signal strength, the directional ADS-B may estimate "range rate" based on tracking signals strengths for each intruder.

Some examples of systems that estimate range based on signal strength may include collision warning systems that switch to active interrogation if the signal strength of received messages is too high, which may indicate the intruder might close enough to be a collision hazard. Another example system may include FLARM where range of some intruders is estimated from the signal strength.

FLARM is a proprietary electronic system used to selectively alert pilots to potential collisions between aircraft with features directed to the specific needs of light aircraft. FLARM obtains its position and altitude readings from an internal GPS and a barometric sensor and then broadcasts the position together with forecast data about the future 3D flight track. At the same time, the FLARM receiver listens for other FLARM devices within range and processes the information received to provide collision prediction alerts, if needed, to the pilot of powered aircraft, helicopters, gliders, and similar general aviation aircraft as well as UAVs. However, estimation of range-only purely from the signal strength can be inaccurate for various reasons. Some reasons may include the signal can be attenuated by body of the aircraft, not all intruders send the messages with the same strength e.g., some ADS-B Out equipment can use one of various available signal strengths.

In contrast, processing circuitry for the ADS-B directional validation system of this disclosure may receive, store and track signal strengths of received ADS-B messages for each intruder separately. In other words, based on changes in the signal strength for a particular intruder over time, the processing circuitry may track a range rate for the particular intruder. The processing circuitry may compare the tracked range rate from measurements to the range rate computed for stored track of the intruder from data in the digital portion of the received ADS-B messages. In response to the tracked range rate based on signal strength differing from the computed range rate based on the transmitted data in the ADS-B message by a threshold amount, the processing circuitry of this disclosure may determine that the sequence of received ADS-B messages from the intruder is not valid.

The processing circuitry may store each respective determined signal strength at a memory location, which is operatively coupled to the processing circuitry. The processing circuitry may further track the range rate in memory from changes over time between the respective determined signal strength stored at the memory location, and calculate a second range rate to the intruder based on the decoded position from ADS-B message bodies of the sequence of ADS-B messages. The processing circuitry may compare the tracked range rate in memory to the calculated second range rate. In response to the tracked range rate matching the calculated second range rate, the processing circuitry may determine that the sequence of ADS-B messages of the intruder are valid, e.g., the ADS-B messages from the intruder are not spoofed or do not contain errors in the digital portion. This range rate comparison may be additional source for ADS-B consistency reporting by the ADS-B directional validation system of this disclosure. The processing circuitry may further output an electronic signal that includes a validity status for the sequence of ADS-B messages and the track of range rate from measurements. The electronic signal may be received by, for example, a collision warning system which may take several different actions depending on the level of consistency, including ignoring the sequence of ADS-B messages.

As described above, a discrepancy between the computed range rate and measured (and tracked) range rate or bearing may be caused by multi-path issues, which may cause duplicate ADS-B messages received by the ownship aircraft. In some examples, the processing circuitry of the system will ignore duplicate ADS-B messages that likely were received due to multipath.

Estimating the range rate in this manner may provide several advantages compared to estimation of range alone, based on signal strength. The calculated range rate based on signal strength may be significantly more sensitive that range-only estimates because the signal strength decreases quadratically with distance. Other advantages may include that the different signal transmission strengths from different intruders may have no effect on the calculation of range rate. In other words, the signal strength tracking for a first intruder is separate from the tracking for a second intruder. Therefore the signal strength tracking only depends on the signal strength from each respective intruder, rather than inaccuracies in the estimate because of different signal strength transmissions from different intruders. In some examples, the range rate tracking function of the ADS-B directional validation function may overcome the inaccuracies caused by attenuation from bodies of the ownship aircraft, or the intruder aircraft. Processing circuitry executing the ADS-B directional validation functions of this disclosure may reduce attenuation inaccuracies by tracking and logic that considers relative positions of the aircraft and the maneuvering or relative flight path of each of the ownship and intruder aircraft.

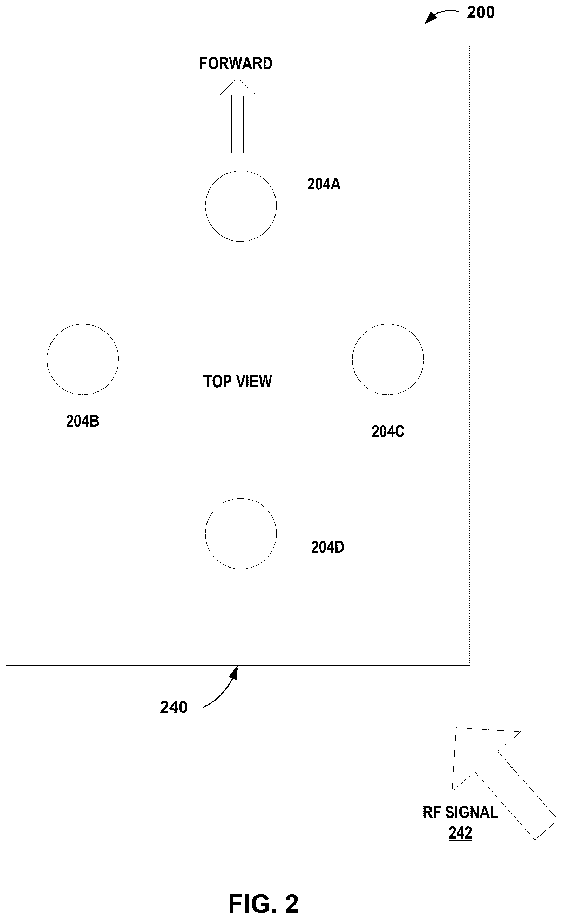

FIG. 2 is a conceptual diagram illustrating an example physical layout of a four-element antenna according to one or more techniques of this disclosure. Antenna 200 may include housing 240 that may provide structural support for antenna elements 204A - 204D. Housing 240 may contain and provide protection for circuitry such as a beamforming network, calibration circuitry, connection ports and other components. In some examples housing 240 is in the shape of an aerodynamic blade. In other examples, housing 240 may be a low profile shape. Antenna 200 may be an existing antenna, such as on a commercial aircraft. As described above in relation to FIG. 1, larger aircraft may have a multi-element antenna, such as antenna 200 mounted on top the aircraft, as well as an omni-directional antenna (not shown in FIG. 2) or a second multi-element antenna mounted to the bottom of the aircraft. A directional antenna similar to antenna 200 may be added to other aircraft without ACAS systems, such as general aviation aircraft, to implement the independent ADS-B validation system of this disclosure.

Antenna elements 204A - 204D are arranged such that a received signal at antenna 200 may have a difference between the different antenna elements. For example, RF signal 242 may arrive at antenna element 204D before antenna element 204B and element 204C receives RF signal 242. Therefore, there may be a phase difference between the signal conducted to a beamforming network of antenna 200 from antenna element 204B and antenna element 204D. Processing circuitry coupled to antenna 200 may use these differences to calculate one or more characteristics of RF signal 242, such as an angle of arrival (AOA), e.g., bearing to the intruder that transmitted RF signal 242. Similarly, the arrangement of antenna elements 204A - 204D may form spatial beams for signals transmitted from antenna 200 by varying the phase and amplitudes of signals sent by a transmission/receiving unit.

As described above in relation to FIG. 1, processing circuitry executing programming instructions to perform the functions of the independent ADS-B validation of this disclosure may calculate a bearing to the intruder based on phase analysis of the received ADS-B message from the directional antenna and track the intruder (using previous directional bearing measurements) and calculate second bearing from the position of intruder decoded from digital content of the ADS-B message. The processing circuitry may compare the tracked bearing to calculated bearing of the intruder decoded from the ADS-B message bodies, which may be stored at memory. The processing circuitry may then output an electronic signal indicating the level of consistency between the tracked bearing and the expected bearing based on ADS-B position. In some examples, the electronic signal may include a validity status for the sequence of ADS-B messages and a tracked bearing to the intruder. The signal may be reported to a receiving system, such as a collision warning system. The receiving system may take several different actions depending on the level of consistency. For example, signals for a tracked bearing that has a high level of consistency with the ADS-B position of the intruder may cause the receiving system to continue using the received ADS-B IN messages in the collision prediction calculations. In other examples, a calculated bearing with a low level of consistency, e.g., the track based on the digitally decoded ADS-B messages differs from the calculated bearing, may cause the receiving system to ignore the target e.g., because of multi-path issues, highlight the target as unreliable, report the target as a possible spoof, or take some other action. In this manner a system that includes he independent ADS-B validation of this disclosure may validate ADS-B messages from intruders that do not have a transponder for active interrogations, such as many general aviation aircraft, UAVs and similar aircraft.

In the example of an intruder that is a commercial aircraft with ACAS, the ownship vehicle may validate the received ADS-B message by broadcasting an ACAS interrogation and waiting for a response. The ownship vehicle may also validate ADS-B messages from intruders with no ACAS capability by use of radar, but not many aircraft have intruder detection radar. However, an aircraft configured to receive ADS-B messages with the directional antenna, and with the independent ADS-B validation features of this disclosure may validate the received ADS-B message, in some examples with improved size, weight, power, and cost (SWaP-C) when compared to other surveillance technologies, such as radar.

Similarly, as described above in relation to FIG. 1, systems that operate with the independent ADS-B validation techniques of this disclosure may have the advantage to be more resilient to attacks, e.g., jamming and spoofing when compared to other comparable systems. A system according to this disclosure may ignore and/or report an intruder that outputs erroneous ADS-B messages and may thereby reduce potential confusion of the pilot, improve situational awareness and avoid unnecessary alerts that may distract the flight crew. Additional benefits may include a reduction in the number of active interrogations, for ACAS equipped aircraft, as well as improved safety when the techniques of this disclosure are implemented with concepts like extended hybrid surveillance.

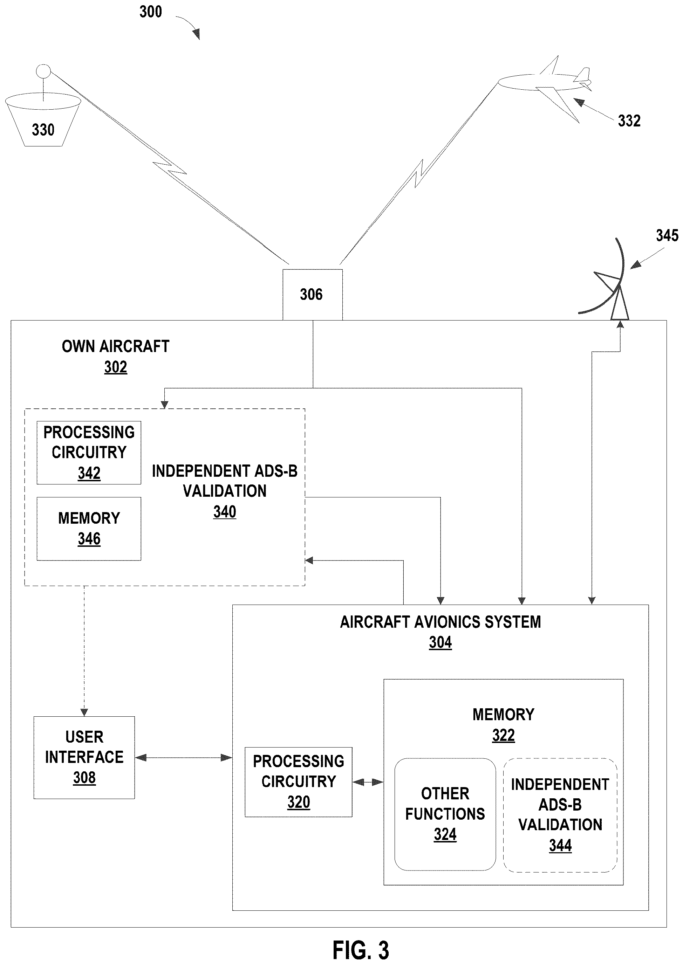

FIG. 3 is a block diagram illustrating one possible example implementation of the independent ADS-B validation of this disclosure, included in programming instructions for an on-board avionics system. The example of system 300 in FIG. 3 includes own aircraft 302 with antenna 306 configured to receive ADS-B signals and/or interrogation replies directly from other vehicles, e.g., aircraft or UAV 332, or via ground station 330. Own aircraft 302 includes aircraft avionics system 304, e.g., a computing device with processing circuitry 320, memory 322 as well as other sensors, controllers, actuators, and so on not shown FIG. 3. Aircraft avionics system 304 may connect to one or more user interfaces 308. User interfaces 308 may display information as well as receive input from the flight crew.

In some examples ownship aircraft 302 may include a stand-alone device 340 with processing circuitry 342 coupled to a memory 346 that performs the independent ADS-B validation of this disclosure.

In some examples, antenna 306 may be configured as a directional antenna, as described above in relation to FIG. 2. In other examples, antenna 306 may be an integrated antenna system that includes both directional antenna functions as well as omni-directional capability. In some examples ownship vehicle 302 may include a separate directional antenna and omni-directional antenna where the omni-directional antenna receives and broadcasts ADS-B messages (not shown in FIG. 3).

In some examples, ownship aircraft 302 may include a stand-alone device 340 with processing circuitry 342 coupled to memory 346 that performs the independent ADS-B validation of this disclosure, described above in relation to FIGS. 1 and 2. Memory 346 may store programming instructions and data storage and tracking information for each intruder aircraft. Stand-alone device 340 may also include connection and communication circuitry, power supply circuitry and other circuitry and mechanical functions. In some examples, the stand-alone device may connect between antenna 306 and aircraft avionics system 304 to validate received ADS-B IN messages from target vehicles. For aircraft that already include a directional ACAS antenna, adding the directional validation functions may not require any additional hardware. When implemented as a stand-alone device, independent ADS-B validation system 340 may directly interact with one or more user interfaces 308, or may interact with user interface 308 via other aircraft avionics systems 304.

In other examples, memory 322 may store programming instructions (344) at a memory location within memory 322 that when executed, cause one or more processors of processing circuitry 320 of aircraft existing avionics system 304 to perform the functions of the independent ADS-B validation of this disclosure described above in relation to FIGS. 1 and 2. Processing circuitry 320 may also execute programming instructions to perform other functions 324, which may include ACAS, ADS-B IN and OUT functions, communication functions, flight management, navigation, cabin air quality and pressure control, engine and other systems controls and other functions (not shown in FIG. 3). In some examples, the independent ADS-B validation functions of this disclosure may be implemented by some combination of stand-alone device 340, along with updates to programming instructions at memory 322. In some examples, the programming instructions at memory 322 may interact with stand-alone hardware device 340, e.g., to facilitate the interaction. In some examples, programming instructions at memory 322 may perform some functions better handled by the avionics, while stand-alone device 340 may perform other functions for ADS-B validation.

In some examples, processing circuitry of ownship 302 may perform the ADS-B validation function for each received ADS-B IN message. In other examples, the processing circuitry may only perform the independent ADS-B validation as needed, e.g., when the processing circuitry detects an anomaly, when the processing circuitry attempts to output an ACAS interrogation and gets not response, or based on some other criteria.

In other examples, ownship 302 may include ADS-B IN and OUT circuitry that only includes a standard omni-directional ADS-B antenna and is separate from processing circuitry 320. The directional antenna may connect to processing circuitry 320 which performs ACAS functions, but may also perform the ADS-B independent validation functions described above, e.g., receive the ADS-B IN message via the directional antenna and calculate an angle of arrival based on phase and/or amplitude differences between the antenna elements of the directional antenna. Processing circuitry 320 may communicate with the separate ADS-B circuitry to receive a location of the intruder based on the decoded ADS-B message. Processing circuitry 320 may compare the angle of arrival and the calculated bearing to the intruder based on the decoded location. As described above in relation to FIGS. 1 and 2, processing circuitry 320 may compare the bearing based on the decoded location to a track of measured bearings stored at memory 322. Processing circuitry 320 may determine that the sequence of received ADS-B IN messages are invalid when the angle of arrival and calculated bearings do not match within a threshold amount of the tracked bearings. Processing circuitry 320 may determine that the set received ADS-B IN messages (and the intruder) are valid when the calculated bearing based on the decoded ADS-B location match the tracked bearings, as described above in relation to FIGS. 1 and 2.

Examples of processing circuitry 320, and 342, may include any one or more of a microcontroller (MCU), e.g. a computer on a single integrated circuit containing a processor core, memory, and programmable input/output peripherals, a microprocessor (µP), e.g. a central processing unit (CPU) on a single integrated circuit (IC), a controller, a digital signal processor (DSP), an application specific integrated circuit (ASIC), a field-programmable gate array (FPGA), a system on chip (SoC) or equivalent discrete or integrated logic circuitry. A processor may be integrated circuitry, i.e., integrated processing circuitry, and that the integrated processing circuitry may be realized as fixed hardware processing circuitry, programmable processing circuitry and/or a combination of both fixed and programmable processing circuitry. Accordingly, the terms "processing circuitry," "processor" or "controller," as used herein, may refer to any one or more of the foregoing structures or any other structure operable to perform techniques described herein.

Examples of memory 322 may include any type of non-transitory computer-readable storage media, such as random access memory (RAM), read only memory (ROM), programmable read only memory (PROM), erasable programmable read only memory (EPROM), one-time programable (OTP) memory, electronically erasable programmable read only memory (EEPROM), flash memory, or another type of volatile or non-volatile memory device. In some examples the computer readable storage media may store instructions that cause processing circuitry 320 to execute the functions described herein. In some examples, the computer readable storage media may store data, such as configuration information, temporary values and other types of data used to perform the functions of this disclosure at a memory location of memory 322.

Processing circuitry 320, or 342, may receive traffic data comprising target state information of a target, e.g., aircraft 332, derived from received ADS-B messages. As described above in relation to FIG. 1, target aircraft 332 may also be referred to as an intruder. The target state information may include target location, target heading and target speed. In some examples, the ADS-B receiving circuitry of aircraft avionics system 304 may check for required message elements including latitude and longitude, velocity, barometric and geographical altitude, flight identification, correct formatting such as for the International Civil Aviation Organization (ICAO) 24-bit address, emitter category, length/width code, and other message elements.

In some examples, processing circuitry 320, or 342, may determine from the ADS-B receiver with directional antenna: measured bearing and signal strength for each ADS-B message; and latitude, longitude, heading, and velocity from corresponding ADS-B digital message bodies. The processing circuitry may track the inputs for each intruder to rule out temporal sensor malfunctions or incorrect bearing readings caused by multipath issues. In some examples, the processing circuitry may ignore duplicate ADS-B messages that likely were received due to multipath. As noted above, the processing circuitry may compare the measured, e.g., tracked, bearing to the digital values from the ADS-B message bodies. The processing circuitry may report the true bearing, true range rate and the level of consistency, e.g., the degree to which the digital/computed and measured bearings and range rates match, to the receiving systems of aircraft avionics systems 304 that depend on ADS-B positions. The report may be included in an electronic signal sent to the receiving systems. The receiving systems of avionics 304 may use the consistency information for different use cases. For instance, a receiving system may ignore inconsistent ADS-B messages when performing traffic collision prediction calculations, which may avoid nuisance alerts to the flight crew. In some examples, inconsistent ADS-B messages describing an aircraft location may still be displayed to the flight crew, but the display may include an indication that the displayed location is suspect, e.g., a color code, a flag or some similar indication.

As described above in relation to FIG. 1, independent ADS-B validation of this disclosure may also be combined with other airborne systems, such as air-to-air radar 345 and active interrogations range estimates. Radar and active interrogations from TCAS 324 may be used less frequently if the digital ADS-B position of intruders is consistent with positions calculated based on phase differences from ADS-B messages received via directional antenna 306. In some examples, airborne systems may also receive consistency level and true (tracked) bearing and true (tracked) range rate. Radar 345 may have a faster detection of an intruder when its probable position is known. In other words, based on the output signal from the ADS-B validation system of this disclosure, that may include, e.g., unvalidated ADS-B position and true (tracked) bearing, the intruder can be detected earlier by radar scanning the areas of true bearing instead of areas of incorrect ADS-B position.

As described above in relation to FIG.1, processing circuitry 320, or processing circuitry 342, for the ADS-B directional validation system of this disclosure may separately receive, store, e.g., in memory 322, and track signal strengths of received ADS-B messages for each intruder. Based on differences in signal strengths over time for each separate intruder, processing circuitry 320 or 342 may estimate a range rate for each intruder.

The techniques of this disclosure may also be described in the following examples.
Example 1: An airborne system comprising: receiver circuitry configured to receive automatic dependent surveillance - broadcast (ADS-B) messages; a directional antenna; and processing circuitry configured to: receive an ownship position and attitude based on ownship navigation and avionics systems; receive an ADS-B message, of a sequence of ADS-B messages from an intruder via the directional antenna; compute a bearing to the intruder based on: phase analysis of the received ADS-B message from the directional antenna; and from the ownship position and/or attitude; incorporate the computed bearing to the track of measured bearings of the intruder, wherein the track of measured bearings is based on the sequence of ADS-B messages received from the intruder; receive from the receiver circuitry, a position of the intruder decoded from digital content of the ADS-B message, calculate a second bearing to the intruder based on the decoded position and from the ownship position and/or ownship attitude; compare the track of measured bearings to the second bearing; and in response to the track of measured bearings matching the second bearing: determine that the sequence of ADS-B messages received from the intruder are valid; and output an electronic signal that includes: a validity status for the sequence of ADS-B messages; and a tracked bearing to the intruder.
Example 2: The system of example 1, wherein the processing circuitry is further configured to determine that the sequence of ADS-B messages is invalid in response to determining that the track of measured bearings fails to match the second bearing.
Example 3: The system of any of examples 1 and 2, wherein the processing circuitry of the system is further configured to ignore received ADS-B messages that the processing circuitry determines are invalid.
Example 4: The system of any of examples 1 through 3, wherein the processing circuitry is further configured to determine that the ADS-B message is not valid based on the track of measured bearing differing from the second bearing by more than a predetermined threshold.
Example 5: The system of any of examples 1 through 4, wherein the directional antenna is configured to receive airborne collision avoidance systems (ACAS) responses from a transponder at a first time, and wherein the directional antenna is configured to receive the ADS-B message at a second time different from the first time.
Example 6: The system of any of examples 1 through 5, wherein the receiver circuitry comprises the processing circuitry.
Example 7: The system of any of examples 1 through 6, wherein the receiver circuitry is configured to receive the ADS-B messages via an omni-directional antenna.
Example 8: The system of any of examples 1 through 7, wherein the processing circuitry is further configured to: determine a signal strength for each respective received ADS-B message of the sequence of ADS-B messages from the intruder; store each respective determined signal strength at a memory location operatively coupled to the processing circuitry; track the range rate in memory from changes over time between the respective determined signal strength stored at the memory location and history of attitudes; and calculate a second range rate to the intruder based on the decoded positions from ADS-B message bodies of the sequence of ADS-B messages and ownship positions; compare the tracked range rate in memory to the calculated second range rate; and in response to the tracked range rate matching the calculated second range rate: determine that the sequence of ADS-B messages of the intruder are valid; and output an electronic signal that includes: a validity status for the sequence of ADS-B messages; and a tracked range rate to the intruder.
Example 9: A device comprising receiver circuitry configured to: receive automatic dependent surveillance - broadcast (ADS-B) messages; and connect to a directional antenna; and processing circuitry configured to: receive an ownship position and attitude based on ownship navigation and avionics systems, receive an ADS-B message, of a sequence of ADS-B messages from an intruder via the directional antenna; compute a bearing to the intruder based on: phase analysis of the received ADS-B message from the directional antenna; and from the ownship position; incorporate the computed bearing to the track of measured bearings of the intruder, wherein the track of measured bearings is based on the sequence of ADS-B messages received from the intruder; receive from the receiver circuitry, a position of the intruder decoded from digital content of the ADS-B message, calculate a second bearing to the intruder based on the decoded position and from the ownship position and/or attitude; compare the track of measured bearings to the second bearing; and in response to the track of measured bearings matching the second bearing: determine that the sequence of ADS-B messages received from the intruder are valid; and output an electronic signal that includes: a validity status for the sequence of ADS-B messages; and a tracked bearing to the intruder.
Example 10: The device of example 9, wherein the device is configured to connect between the directional antenna and one or more avionics systems on an aircraft.
Example 11: The device of any of examples 9 and 10, wherein the directional antenna is configured to receive airborne collision avoidance systems (ACAS) responses from a transponder at a first time, and wherein the directional antenna is configured to receive the ADS-B message at a second time different from the first time.
Example 12: The device of any of examples 9 through 11, wherein the processing circuitry is further configured to determine that the sequence of ADS-B messages is invalid in response to determining that the track of measured bearings fails to match the second bearing.
Example 13: The device of any of examples 9 through 12, wherein the processing circuitry is further configured to ignore received ADS-B messages that the processing circuitry determines are invalid.
Example 14: The device of any of examples 9 through 13, wherein the processing circuitry is further configured to determine that the ADS-B message is not valid based on the track of measured bearing differing from the second bearing by more than a predetermined threshold range.
Example 15: The device of any of examples 9 through 14, wherein the received ADS-B message is a first ADS-B message of a sequence of ADS-B messages from the intruder, wherein the processing circuitry is further configured to: determine a signal strength for each respective received ADS-B message of the sequence of ADS-B messages from the intruder; store each respective determined signal strength at a memory location operatively coupled to the processing circuitry ; track the range rate in memory from changes over time between the respective determined signal strength stored at the memory location and history of attitudes; and calculate a second range rate to the intruder based on the decoded positions from ADS-B message bodies of the sequence of ADS-B messages and ownship positions; compare the tracked range rate in memory to the calculated second range rate; and in response to the tracked range rate matching the calculated second range rate: determine that the sequence of ADS-B messages of the intruder are valid; and output an electronic signal that includes: a validity status for the sequence of ADS-B messages; and a tracked range rate to the intruder.
Example 16: A non-transitory computer-readable storage medium comprising instructions that, when executed, cause processing circuitry of a computing device to: receive an ownship position and attitude based on ownship navigation and avionics systems; receive automatic dependent surveillance - broadcast (ADS-B) messages from receiver circuitry operatively coupled to a directional antenna; compute a bearing to the intruder based on: phase analysis of the received ADS-B message from the directional antenna; and from the ownship position; incorporate the computed bearing to the track of measured bearings of the intruder, wherein the track of measured bearings is based on the sequence of ADS-B messages received from the intruder; receive from the receiver circuitry, a position of the intruder decoded from digital content of the ADS-B message, calculate a second bearing to the intruder based on the decoded position of the intruder and from the ownship position and/or an ownship attitude; compare the track of measured bearings to the second bearing; and in response to the track of measured bearings matching the second bearing: determine that the ADS-B message is valid; and output an electronic signal that includes: a validity status for the sequence of ADS-B messages; and a tracked bearing to the intruder.
Example 17: The non-transitory computer-readable storage medium of example 16, further comprising instructions for causing the processing circuitry to ignore the sequence of received ADS-B messages that the processing circuitry determines are invalid.
Example 18: The non-transitory computer-readable storage medium of any of examples 16 and 17, further comprising instructions for causing the processing circuitry to determine that the sequence of ADS-B messages is not valid based on the track of measured bearings differing from the second bearing by more than a predetermined threshold.
Example 19: The non-transitory computer-readable storage medium of any of examples 16 through 18, wherein the received ADS-B message is a first ADS-B message of a sequence of ADS-B messages from the intruder, wherein the processing circuitry is further configured to: determine a signal strength for each respective received ADS-B message of the sequence of ADS-B messages from the intruder; store each respective determined signal strength at a memory location operatively coupled to the processing circuitry; track the range rate in memory based on changes over time between the respective determined signal strength stored at the memory location and history of attitudes; and calculate a second range rate to the intruder based on the decoded positions from ADS-B message bodies of the sequence of ADS-B messages and ownship positions; compare the tracked range rate in memory to the calculated second range rate; and in response to the tracked range rate matching the calculated second range rate: determine that the sequence of ADS-B messages of the intruder are valid; and output an electronic signal that includes: a validity status for the sequence of ADS-B messages; and a tracked range rate to the intruder.
Example 20: The non-transitory computer-readable storage medium of any of examples 16 through 19, wherein the processing circuitry is configured compute the bearing to the intruder based on the phase analysis and an amplitude of the received ADS-B message from the directional antenna and the tracked range rate.

In one or more examples, the functions described above may be implemented in hardware, software, firmware, or any combination thereof. For example, the various components of FIG. 3, such as processing circuitry 320 and processing circuitry 342 may be implemented in hardware, software, firmware, or any combination thereof. If implemented in software, the functions may be stored on a tangible computer-readable storage medium and executed by a processor or hardware-based processing unit..

Instructions may be executed by one or more processors, such as one or more digital signal processors (DSPs), general purpose microprocessors, application specific integrated circuit (ASIC), Field programmable gate array (FPGAs), or other equivalent integrated or discrete logic circuitry. Accordingly, the term "processor," and "processing circuitry" as used herein, such as may refer to any of the foregoing structure or any other structure suitable for implementation of the techniques described herein. Also, the techniques could be fully implemented in one or more circuits or logic elements.

The techniques of this disclosure may be implemented in a wide variety of devices or apparatuses, including a wireless handset, an integrated circuit (IC) or a sequence of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described

Various examples of the disclosure have been described. These and other examples are within the scope of the following claims.

## Claims

1. An airborne system, the system comprising:
receiver circuitry configured to receive automatic dependent surveillance - broadcast (ADS-B) messages;
a directional antenna; and
processing circuitry configured to:
receive an ownship position and attitude based on ownship navigation and avionics systems;
receive an ADS-B message, of a sequence of ADS-B messages from an intruder via the directional antenna;
compute a bearing to the intruder based on:
phase analysis of the received ADS-B message from the directional antenna; and
from the ownship position and/or attitude;
incorporate the computed bearing to the track of measured bearings of the intruder, wherein the track of measured bearings is based on the sequence of ADS-B messages received from the intruder;
receive from the receiver circuitry, a position of the intruder decoded from digital content of the ADS-B message,
calculate a second bearing to the intruder based on the decoded position and from the ownship position and/or attitude;
compare the track of measured bearings to the second bearing; and
in response to the track of measured bearings matching the second bearing:
determine that the sequence of ADS-B messages received from the intruder are valid; and
output an electronic signal that includes:
a validity status for the sequence of ADS-B messages; and
a tracked bearing to the intruder.

2. The system of claim 1, wherein the processing circuitry is further configured to determine that the sequence of ADS-B messages is invalid in response to determining that the track of measured bearings fails to match the second bearing.

3. The system of claims 1 and 2, wherein the processing circuitry of the system is further configured to ignore received ADS-B messages that the processing circuitry determines are invalid.

4. The system of any of claims 1 - 3, wherein the processing circuitry is further configured to determine that the ADS-B message is not valid based on the track of measured bearing differing from the second bearing by more than a predetermined threshold.

5. The system of any of claims 1 - 4,
wherein the directional antenna is configured to receive airborne collision avoidance systems (ACAS) responses from a transponder at a first time, and
wherein the directional antenna is configured to receive the ADS-B message at a second time different from the first time.

6. The system of any of claims 1-5, wherein the receiver circuitry comprises the processing circuitry.

7. The system of any of claims 1 - 6, wherein the receiver circuitry is configured to receive the ADS-B messages via an omni-directional antenna.

8. The system of any of claims 1 - 7, wherein the processing circuitry is further configured to:
determine a signal strength for each respective received ADS-B message of the sequence of ADS-B messages from the intruder;
store each respective determined signal strength at a memory location operatively coupled to the processing circuitry;
track the range rate in memory based on changes over time between the respective determined signal strength stored at the memory location and history of attitudes; and
calculate a second range rate to the intruder based on the decoded positions from ADS-B message bodies of the sequence of ADS-B messages and ownship positions;
compare the tracked range rate in memory to the calculated second range rate; and
in response to the tracked range rate matching the calculated second range rate:
determine that the sequence of ADS-B messages of the intruder are valid; and
output an electronic signal that includes:
a validity status for the sequence of ADS-B messages; and
a tracked range rate to the intruder.

9. A device comprising:
receiver circuitry configured to:
receive automatic dependent surveillance - broadcast (ADS-B) messages; and
connect to a directional antenna; and
processing circuitry configured to:
receive an ownship position and attitude based on ownship navigation and avionics systems,
receive an ADS-B message, of a sequence of ADS-B messages from an intruder via the directional antenna;
compute a bearing to the intruder based on:
phase analysis of the received ADS-B message from the directional antenna; and
from the ownship position and/or attitude;
incorporate the computed bearing to the track of measured bearings of the intruder, wherein the track of measured bearings is based on the sequence of ADS-B messages received from the intruder;
receive from the receiver circuitry, a position of the intruder decoded from digital content of the ADS-B message,
calculate a second bearing to the intruder based on the decoded position and from the ownship position and/or attitude;
compare the track of measured bearings to the second bearing; and
in response to the track of measured bearings matching the second bearing:
determine that the sequence of ADS-B messages received from the intruder are valid; and
output an electronic signal that includes:
a validity status for the sequence of ADS-B messages; and
a tracked bearing to the intruder.

10. The device of claim 9, wherein the processing circuitry is further configured to determine that the sequence of ADS-B messages is invalid in response to determining that the track of measured bearings fails to match the second bearing.

11. The device of claims 9 and 10 , wherein the received ADS-B message is a first ADS-B message of the sequence of ADS-B messages from the intruder, wherein the processing circuitry is further configured to:
determine a signal strength for each respective received ADS-B message of the sequence of ADS-B messages from the intruder;
store each respective determined signal strength at a memory location operatively coupled to the processing circuitry;
track the range rate in memory based on changes over time between the respective determined signal strength stored at the memory location and history of attitudes; and
calculate a second range rate to the intruder based on the decoded positions from ADS-B message bodies of the sequence of ADS-B messages and ownship positions;
compare the tracked range rate in memory to the calculated second range rate; and
in response to the tracked range rate matching the calculated second range rate:
determine that the sequence of ADS-B messages of the intruder are valid; and
output an electronic signal that includes:
a validity status for the sequence of ADS-B messages; and
a tracked range rate to the intruder.

12. A non-transitory computer-readable storage medium comprising instructions that, when executed, cause processing circuitry of a computing device to:
receive an ownship position and attitude based on ownship navigation and avionics systems;
receive automatic dependent surveillance - broadcast (ADS-B) messages from receiver circuitry operatively coupled to a directional antenna;
compute a bearing to the intruder based on:
phase analysis of the received ADS-B message from the directional antenna; and
from the ownship position and/or attitude;
incorporate the computed bearing to the track of measured bearings of the intruder, wherein the track of measured bearings is based on the sequence of ADS-B messages received from the intruder;
receive from the receiver circuitry, a position of the intruder decoded from digital content of the ADS-B message,
calculate a second bearing to the intruder based on the decoded position of the intruder and from the ownship position and/or an ownship attitude;
compare the track of measured bearings to the second bearing; and
in response to the track of measured bearings matching the second bearing:
determine that the ADS-B message is valid; and
output an electronic signal that includes:
a validity status for the sequence of ADS-B messages; and
a tracked bearing to the intruder.

13. The non-transitory computer-readable storage medium of claim 12, further comprising instructions for causing the processing circuitry to determine that the sequence of ADS-B messages is not valid based on the track of measured bearings differing from the second bearing by more than a predetermined threshold.

14. The non-transitory computer-readable storage medium of claims 12 and 13, wherein the received ADS-B message is a first ADS-B message of a sequence of ADS-B messages from the intruder, wherein the processing circuitry is further configured to:
determine a signal strength for each respective received ADS-B message of the sequence of ADS-B messages from the intruder;
store each respective determined signal strength at a memory location operatively coupled to the processing circuitry;
track the range rate in memory based on changes over time between the respective determined signal strength stored at the memory location and history of attitudes; and
calculate a second range rate to the intruder based on the decoded positions from ADS-B message bodies of the sequence of ADS-B messages and ownship positions;
compare the tracked range rate in memory to the calculated second range rate; and
in response to the tracked range rate matching the calculated second range rate:
determine that the sequence of ADS-B messages of the intruder are valid; and
output an electronic signal that includes:
a validity status for the sequence of ADS-B messages; and
a tracked range rate to the intruder.

15. The non-transitory computer-readable storage medium of any of claims 12 - 14, wherein the processing circuitry is configured compute the bearing to the intruder based on the phase analysis and an amplitude of the received ADS-B message from the directional antenna and the tracked range rate.
